# EUROPEAN PATENT SPECIFICATION

(11) **EP 3 863 378 B1**
(45) Date of publication and mention of the grant of the patent: **19.07.2023**
(21) Application number: 21150496.4
(22) Date of filing: 07.01.2021
(51) Int. Cl.: H05B 45/345, H05B 45/395, H05B 45/50

(54) **LIGHTING MODULE AND CORRESPONDING LIGHTING SYSTEM**
BELEUCHTUNGSMODUL UND ENTSPRECHENDES BELEUCHTUNGSSYSTEM
MODULE D'ÉCLAIRAGE ET SYSTÈME D'ÉCLAIRAGE CORRESPONDANT

(30) Priority: 04.02.2020 IT 202000002164
(43) Date of publication of application: 11.08.2021
(73) Proprietor: OPTOTRONIC GmbH, 85748 Garching (DE)
(72) Inventor: GRIFFONI, Alessio, 30030 Fossò (Venezia) (IT); ANGELIN, Francesco, 31021 Mogliano Veneto (Treviso) (IT)
(74) Representative: Bosotti, Luciano

(56) References cited:
- EP-A1- 2 482 617
- EP-A1- 3 277 056
- CN-A- 109 309 986
- CN-B- 104 780 646

## Description

### Field of the invention

The description relates to lighting modules, in particular lighting modules comprising solid-state light sources, such as LED sources.

### Description of the prior art

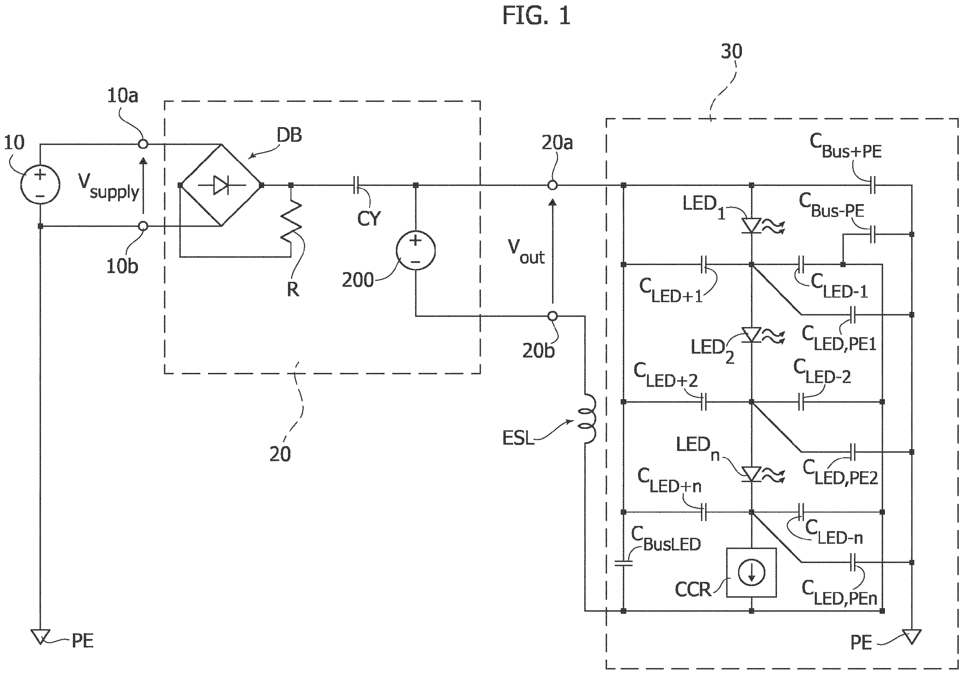

Figure 1 shows a simplified electrical diagram of a typical lighting system (for example, a constant-voltage LED system) comprising an electrical power-supply source 10, an isolated power-supply device or constant-voltage electronic control gear 20 (ECG), and a lighting module 30.

The power-supply source 10 typically comprises an AC (alternating current) power-supply network, for example 230 V_{RMS} at a frequency of 50 Hz or 60 Hz. Alternatively, the power-supply source 10 may comprise a DC (direct current) power-supply source, such as a battery.

Typically, the power-supply source 10 supplies a supply voltage *V_{supply}* between two output terminals 10a and 10b. The supply voltage *V_{supply}* is referenced to a reference voltage node PE or ground. In various applications, the reference voltage node PE may correspond to a protection earth (PE) or functional earth (FE) .

The isolated power-supply device 20 is coupled to the terminals 10a, 10b of the power-supply source 10 to receive at input the supply voltage *V_{supply}* and supply at output, between two output terminals 20a and 20b, a DC output voltage *Vₒᵤₜ* for power supply of the lighting module 30. The DC output voltage *Vₒᵤₜ* may be, for example, a regulated voltage of 12 V, 24 V, or 48 V.

As illustrated in the simplified diagram of Figure 1, the isolated power-supply device 20 may comprise a diode bridge DB coupled to the input terminals of the power-supply device. The resistance R coupled to the output of the diode bridge DB represents schematically the electrical load of the system reflected back to the primary side. The capacitance CY represents schematically the coupling capacitance Y between the primary side and the secondary side of the power-supply device 20 (it will be noted, on the other hand, that the representation of the power-supply device 20 provided in Figure 1 and in the subsequent figures constitutes a purely schematic simplified electrical model, and not a detailed circuit diagram since it is an architecture known per se to the person skilled in the art).

In various embodiments, the power-supply device 20 may comprise, once again according to architectures known per se, one or more circuits for implementing one or more additional functions, such as a circuit configured for dimming the output power, a power factor correction circuit and/or a circuit for suppressing radiofrequency interference.

The dimming function may be implemented by means of a modulator circuit 200 that modulates the DC output voltage *Vₒᵤₜ* between a first voltage value and a second voltage value, the first value being higher than the second value.

Typically, the modulator circuit 200 is a pulse-width modulation (PWM) circuit that operates at a preset frequency (for example, 250 Hz, 500 Hz, 1 kHz or 2 kHz) or else at a variable frequency. The on-time of the PWM signal generated by the modulator circuit 200 may be made to vary in order to obtain the desired duty-cycle (for example, between 0.1% and 100%) and thus regulate the intensity of the light radiation emitted by the lighting module 30.

One or more lighting modules 30 are connected to the output terminals 20a, 20b of the power-supply device 20 for receiving the voltage *Vₒᵤₜ* via an electrical connection line. Typically, the electrical connection line comprises an electrically conductive cable the length of which may vary widely, for example from 0.5 m to 50 m or even more. Illustrated schematically in Figure 1 is an inductance ESL that represents the overall equivalent series inductance of the electrical connection line between the power-supply device 20 and the lighting module 30.

By way of example, the diagram of Figure 1 represents just one lighting module 30 connected to the terminals 20a, 20b for simplicity of illustration. In various embodiments, a number of lighting modules 30 may be connected in parallel to the terminals 20a, 20b to receive the same voltage *Vₒᵤₜ*.

Each lighting module 30 typically comprises one or more single electrical units or smallest electrical units (SEUs) connected in parallel. Each of these smallest electrical units comprises a plurality of solid-state light sources, such as LED or laser sources, connected in series and/or in parallel with one another. The lighting module 30 illustrated in Figure 1 comprises just one SEU for simplicity of representation. The smallest electrical unit comprises a number n of solid-state light sources LED₁, LED₂, ..., LEDₙ that form a string or chain of light sources.

Each smallest electrical unit may also comprise a respective current-regulating circuit or constant current regulator CCR connected in series to the string of light sources to regulate the level of current that flows in the SEU at a desired value for proper operation of the light sources. For instance, the current may be regulated at a value comprised between some milliamps and some hundreds of milliamps.

The lighting modules 30 may be obtained in different forms. For instance, a lighting module 30 may be manufactured with a linear form and may reach a length of 20 m.

The lighting system may comprise a reference system (ground system), which may be explicit (such as an earth) or implicit, deriving from the physical arrangement of all the parts and components that as a whole form the system, also including the elements for fixing the lighting modules and/or the resistive paths.

As illustrated schematically in Figure 1, various components of the lighting system (and in particular, of the lighting module 30) comprise one or more capacitances, which as a whole constitute a complex capacitive network (for example, a network of capacitive dividers). The capacitances may be differential (i.e., coupled between two terminals of a respective component) or else referenced to the reference voltage node PE.

Some of the above capacitances are parasitic capacitances (for example, due to the coupling of an electronic circuit or component to a printed circuit board or PCB), others are constituted by discrete components (for example, a capacitor within an electromagnetic interference filtering circuit), others still may be capacitances intrinsic in the structure of the respective electronic component (for example, the junction capacitances in light sources of a LED type).

By way of example, Figure 1 annexed hereto (and the subsequent figures) represent the capacitances C_{LED+1}, C_{LED+2}, ..., C_{LED+n}; C_{LED-1}, C_{LED-2}, ..., C_{LED-n}; C_{LED,PE1}, C_{LED,PE2}, ..., C_{LED,PEn}; C_{BusLED}; C_{Bus+PE}, C_{Bus-PE}. It will hence be understood that the capacitances explicitly represented in the figures annexed hereto do not necessarily correspond to respective discrete components in the lighting module 30; instead, they are prevalently parasitic or intrinsic capacitances.

The reference voltage node PE provides a resistive path between the parasitic capacitive elements in such a way that the variations of a voltage supplied at input to the lighting module 30 can be transferred, even partially, to each solid-state light source LED₁, LED₂, ..., LEDₙ. In addition, in the lighting module 30 differential currents may be generated that do not exploit the reference node PE to develop negative voltages.

The inventors have noted that, on account of the complex interaction between the (parasitic) capacitive network and the other electrical components of the lighting system, one or more of the light sources LED₁, LED₂, ..., LEDₙ in the lighting module 30 may be subjected to reverse biasing transient voltages (also referred to as negative voltages) during the off-time of the (pulse-width) modulated voltage *Vₒᵤₜ* supplied by the modulator circuit 200 (for example, a dimming circuit).

The degree and effects of the aforesaid transient currents (which generate respective transient voltages) depend on the nature of the electrical components involved, on their dimensions, and on their particular arrangement. By virtue of the relative variability of the processes for manufacturing the lighting devices considered herein, this may result in an extremely wide range of possible combinations.

The inventors have noted that, once the structure of the capacitive network has been defined, the amplitude of the reverse biasing transient voltages depends on the magnitude of the capacitances in the network (for example, the capacitances C_{LED+1}, C_{LED+2}, ..., C_{LED+n}; C_{LED-1}, C_{LED-2}, ..., C_{LED-n}; C_{LED,PE1}, C_{LED,PE2}, ..., C_{LED,PEn}; C_{BusLED}; C_{Bus+PE}, C_{Bus-PE} already mentioned previously) and on the amplitude of the time-variable voltage signals applied to the lighting module 30. These time-variable voltage signals mainly comprise:
- the AC supply voltage (where used) supplied by the power-supply source 10 at the mains frequency (50 Hz or 60 Hz); and
- the (pulse-width) modulated voltage *Vₒᵤₜ* supplied by the modulator circuit 200 as dimming signal.

Since the network of parasitic capacitances is coupled to a resistive network, the amplitude of the reverse biasing transient voltages also depends on the currents that these capacitances are able to drive, which in turn depend on (for example, are proportional to) the rate of variation in time of the voltages in the circuit (i.e., the derivatives dV/dt). Consequently, higher-frequency signals are able to generate (transient) voltages of greater amplitude, given the same resistive load.

The inventors have then noted that the reverse biasing transient voltages that can build up on the light sources LED₁, LED₂, ..., LEDₙ during the off-times of the PWM dimming signal are caused mainly by superposition of two effects.

The first effect is due to the capacitive currents that develop on account of the coupling of the lighting module 30 to a power-supply source 10 that supplies an AC voltage at a certain frequency (typically 50 Hz or 60 Hz). In this case, the frequency is rather low, but the amplitude of the supply voltage may be relatively high (typically 230 V_{RMS}). The path of propagation of such currents comprises the common reference node PE (i.e., the earth), to which both the power-supply source 10 and the lighting module 30, as well as frequently also the power-supply device 20, are referenced. Even though the resistance in series to the path of propagation of current may be relatively high (for example, higher than 1 MΩ), it does not significantly alter the impedance of the propagation loop in so far as the capacitances involved typically have a magnitude of a few picofarads that, at the mains frequency (50 Hz or 60 Hz), also corresponds to a reactance of a value that is higher than some megaohms. The effect of the capacitive currents due to the supply voltage supplied by the power-supply source 10 can be viewed as a sort of common mode effect, according to terminology used in the EMI field.

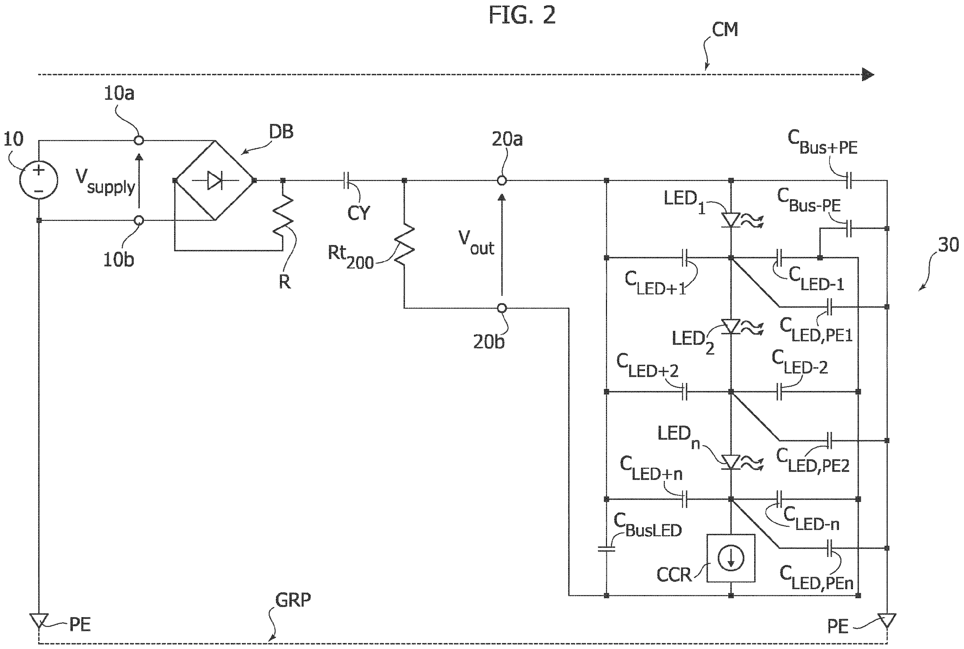

For instance, Figure 2 is a simplified electrical model of the lighting system already illustrated in Figure 1 (the same reference numbers correspond to components that are the same or similar), which represents schematically the main elements of the system that play a role in the generation of the capacitive currents due to coupling of the lighting module 30 to the power-supply source 10. In Figure 2, the resistance Rt₂₀₀ is the equivalent resistance of the modulator circuit 200 considered in the off condition. The dashed arrow CM indicates schematically the path of propagation of the capacitive currents, and the dashed arrow GRP indicates the path of return of the currents through the common reference node PE.

The second effect that contributes to generation of reverse biasing transient voltages on the light sources LED₁, LED₂, ..., LEDₙ is due to the capacitive currents that develop on account of the modulated voltage *Vₒᵤₜ* supplied by the modulator circuit 200 to the lighting module 30. In this case, the frequencies (i.e., the spectral components of the modulated voltage, which may be pulse-width modulated) are higher than those of the supply voltage *V_{supply}*, but the amplitude is smaller (for example, 24 V in the case of a voltage modulated at 24 V having a modulation depth of 100%). Consequently, the effect of the capacitive currents due to the modulated voltage *Vₒᵤₜ* is comparable to that of the capacitive currents due to the supply voltage *V_{supply}.* The effect of the capacitive currents due to the modulated voltage *Vₒᵤₜ* can be viewed as a sort of differential mode effect, according to a designation in use in the EMI field.

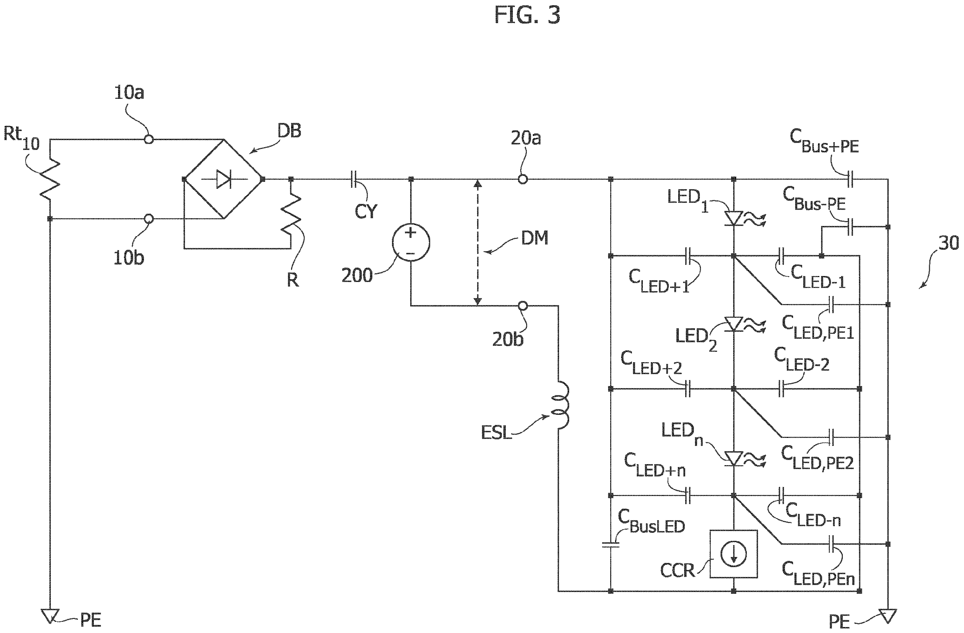

For instance, Figure 3 is a simplified electrical model of the lighting system already illustrated in Figures 1 and 2 (once again, the same reference numbers correspond to components that are the same or similar), which represents schematically the main elements of the system that play a role in the generation of the capacitive currents due to the modulated voltage *Vₒᵤₜ* supplied by the modulator circuit 200. In Figure 3, the resistance Rt₁₀ is the equivalent resistance of the power-supply source 10 considered as being turned off. The dashed arrow DM indicates schematically application of a differential mode voltage to the lighting module 30. In addition, a common mode component may be present also for the capacitive currents generated by the modulated voltage *Vₒᵤₜ* in so far as the path of propagation of current through the common reference node PE is available for the currents that propagate through the capacitance CY (where the capacitance CY is to be understood as representing not only the real capacitor CY, but also parasitic capacitances between the primary and the secondary of the power-supply device 20).

The inventors have noted that the reverse biasing transient voltages that can develop on the light sources LED₁, LED₂, ..., LEDₙ during the off-times of the modulated voltage *Vₒᵤₜ* are due mainly to superposition of the two contributions discussed with reference to Figures 2 and 3, which may be added together or may cancel out, determining the overall value of the reverse biasing transient voltages. For instance, such transient voltages may reach values of -10 V in a lighting module 30 supplied with a voltage of 24 V.

Typically, the light sources LED₁, LED₂, ..., LEDₙ (for example, low-power ones) in the lighting modules 30 are not designed to withstand such reverse biasing voltages. Consequently, if the light sources LED₁, LED₂, ..., LEDₙ are subjected to repeated events of electrical over-stress (EOS) such as the ones described previously (i.e., in concomitance with the off-times of the modulated voltage *Vₒᵤₜ*)*,* there may follow gradual degradation of the light sources and, in extreme cases, damage thereto (even permanent), which prevents emission of light radiation.

In the context of LED lighting devices, document EP 3277056 A1 discloses a vehicle lighting device. The lighting device includes a plurality of circuit portions that have at least one light emitting element, and a control portion that is electrically connected to the plurality of circuit portions. The control portion detects an input voltage and connects the plurality of circuit portions in series when the detected input voltage exceeds a predetermined value, and connects at least a part of the plurality of circuit portions in parallel when the detected input voltage is equal to or less than the predetermined value. By doing so, even when a voltage applied to the vehicle lighting device decreases, it is possible to secure a required total luminous flux and to suppress fluctuation of the total luminous flux.

In particular, the lighting device disclosed by document EP 3277056 A1 may comprise a first light-emitting circuit portion and a second light-emitting circuit portion, each including at least one light emitting element. A first diode is provided on an input side of the lighting device. The first diode is provided so that a reverse voltage is not applied to the light emitting elements and pulse noise is not applied to the light emitting elements from a reverse direction. A second diode is provided between the first circuit portion and the second circuit portion. An anode side of the second diode is electrically connected to the first circuit portion. A cathode side of the second diode is electrically connected to the second circuit portion. The second diode is provided so that the reverse voltage is not applied to the first circuit portion when the first circuit portion and the second circuit portion are connected in parallel. More generally, the vehicle lighting device disclosed by document EP 3277056 A1 can include diodes of which an anode side is electrically connected to an output side of one circuit portion and a cathode side is electrically connected to an input side of the other circuit portion, so that a reverse voltage is not applied to a part of the light emitting elements when the connection of the plurality of circuit portions are switched from the connection in series to the connection in parallel.

### Object and summary

The object of the present disclosure is to provide solutions for countering onset of reverse biasing transient voltages that may be generated on the solid-state light sources of a lighting module of the type described previously. In particular the invention is related to a lighting module according to claim 1 and a lighting system according to claim 7. Preferred embodiments of the invention are defined by the dependent claims. In particular, such transient voltages may be due to the electrical interaction between a complex (parasitic) capacitive network in the lighting system and at least one time-variable voltage signal, such as an AC voltage supply and/or a modulated voltage (for example, a pulse-width-modulated voltage to obtain a dimming function).

According to various embodiments, the above object is achieved by means of a lighting module having the features set forth in the claims that follow. The claims also refer to a corresponding lighting system.

The claims form an integral part of the technical teaching provided herein in relation to the invention.

In various embodiments, a lighting module comprises:
- a first input terminal and a second input terminal, which are configured to receive between them a supply voltage that switches between a first voltage value and a second voltage value, the first voltage value being higher than the second voltage value,
- a string of solid-state light sources connected in series between the first input terminal and the second input terminal, where the string of light sources comprises a first light source having a respective positive terminal coupled to the first input terminal and a last light source having a respective negative terminal coupled to the second input terminal; and
- a constant-current regulator connected in series to the string of light sources between the first input terminal and the second input terminal and configured to regulate the current that flows through the string of solid-state light sources.

In various embodiments, a lighting module comprises a first negative voltage protection circuit and a second negative voltage protection circuit connected in series to the string of light sources between the first input terminal and the second input terminal.

In various embodiments, the first protection circuit is connected between the first input terminal and the first light source, and the second protection circuit is connected between the last light source and the second input terminal.

In various embodiments, the first protection circuit comprises:
- a junction (for example, a p-n junction, a Zener diode or a metal-semiconductor junction) having the anode connected to the first input terminal and the cathode connected to the first light source; or
- a p-MOS field effect transistor having a drain terminal connected to the first input terminal, a source terminal connected to the first light source, and a gate terminal connected to a node intermediate between two consecutive light sources of the string of light sources.

In various embodiments, the second protection circuit comprises:
- a junction (for example, a p-n junction, a Zener diode, or a metal-semiconductor junction) having the anode connected to the last light source and the cathode connected to the second input terminal; or
- an n-MOS field effect transistor having a source terminal connected to the last light source, a drain terminal connected to the second input terminal, and a gate terminal connected to a node intermediate between two consecutive light sources of the string of light sources.

In various embodiments, the gate terminal of the p-MOS field effect transistor is connected to a node intermediate between the first light source and a second light source of the string of light sources.

In various embodiments, the gate terminal of the n-MOS field effect transistor is connected to a node intermediate between a penultimate light source and the last light source of the string of light sources.

In various embodiments, the gate terminal of the p-MOS field effect transistor is connected to a node intermediate between two consecutive light sources of the string of light sources, and the two consecutive light sources do not comprise the first light source.

In various embodiments, the gate terminal of the n-MOS field effect transistor is connected to a node intermediate between two consecutive light sources of the string of light sources, and the two consecutive light sources do not comprise the last light source.

In various embodiments, a lighting module comprises a capacitance connected between the gate terminal of the p-MOS field effect transistor and the gate terminal of the n-MOS field effect transistor.

In various embodiments, a lighting module comprises a plurality of strings of solid-state light sources. The strings are connected in parallel between the first input terminal and the second input terminal. Each string in the plurality of strings comprises a respective constant-current regulator, a respective first negative voltage protection circuit and a respective second negative voltage protection circuit.

In various embodiments, a lighting module comprises a plurality of strings of solid-state light sources. Each string in the plurality of strings comprises a respective constant-current regulator. The strings are connected in parallel between the first negative voltage protection circuit and the second negative voltage protection circuit.

In various embodiments, a lighting system comprises:
- a power-supply device configured to receive at input a voltage from a power-supply source and supply at output a supply voltage that switches between a first voltage value and a second voltage value; and
- one or more lighting modules according to one or more embodiments, which are connected to the output of the power-supply device to receive said supply voltage.

### Brief description of the annexed drawings

Embodiments will now be described, purely by way of non-limiting example, with reference to the annexed representations, wherein:
- Figures 1 to 3 have already been described previously;
- Figure 4 shows a simplified circuit diagram of a lighting module according to various embodiments;
- Figures 5A and 5B show, respectively, two possible implementations of a constant-current regulator for use in various embodiments; and
- Figures 6 to 8 show simplified circuit diagrams of lighting modules according to various preferred embodiments.

### Detailed description of embodiments

In the ensuing description various specific details are illustrated aimed at providing an in-depth understanding of the embodiments. The embodiments may be obtained without one or more of the specific details, or with other methods, components, materials, etc. In other cases, known structures, materials, or operations are not illustrated or described in detail so that various aspects of the embodiments will not be obscured.

Reference to "an embodiment" or "one embodiment" in the framework of the present description is intended to indicate that a particular configuration, structure, or characteristic described in relation to the embodiment is comprised in at least one embodiment. Consequently, phrases such as "in an embodiment" or "in one embodiment" or the like that may be present in various points of this description do not necessarily refer to one and the same embodiment. Moreover, particular conformations, structures, or characteristics may be combined in any adequate way in one or more embodiments.

The references used herein are provided merely for convenience and hence do not define the extent of protection or the scope of the embodiments.

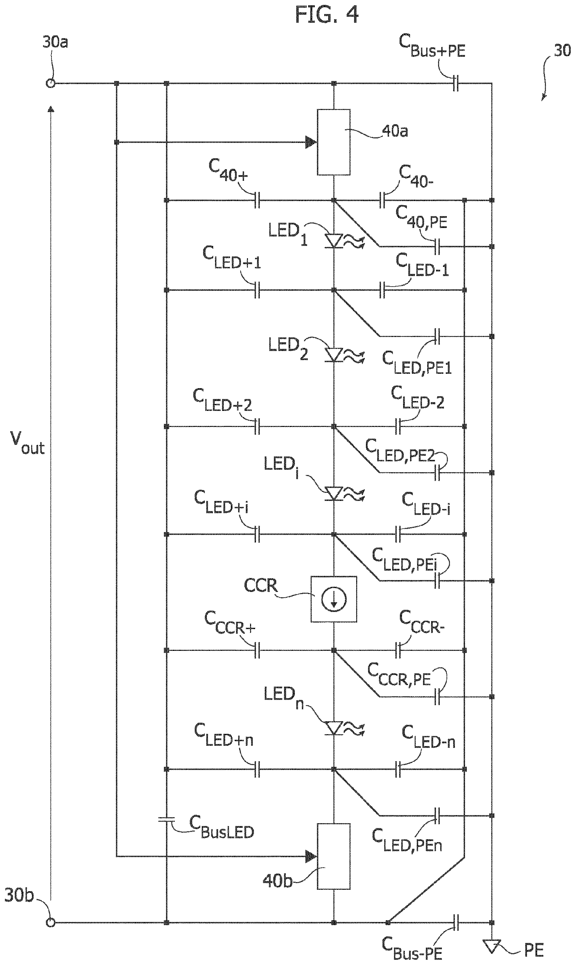

In the ensuing Figures 4 to 8, parts, elements, or components that have already been described with reference to Figures 1 to 3 are designated by the same references used previously in these figures; the description of these elements described previously will not be repeated hereinafter in order not to overburden the present detailed description.

As mentioned previously, the present disclosure regards lighting modules of the type illustrated in Figures 1 to 3. For the general description of these lighting modules and of the corresponding lighting systems reference may hence be made to the description of Figures 1 to 3, in particular as regards the description of the (parasitic) capacitive network comprising the capacitances C_{LED+1}, C_{LED+2}, C_{LED+i}, ..., C_{LED+n}; C_{LED-1}, C_{LED-2}, C_{LED-the}, ..., C_{LED-n}; C_{LED,PE1}, C_{LED,PE2}, C_{LED,PEi}, ..., C_{LED,PEn}; C_{BusLED}; C_{Bus+PE}, C_{Bus-PE}.

One or more embodiments of the present disclosure provide, in the aforesaid lighting modules, circuits configured to protect the light sources LED₁, LED₂, ..., LEDₙ from the reverse biasing transient voltages.

A first solution to the problem of reverse biasing transient voltages consists in connecting a shunt diode, such as a Zener diode, or a TVS (Transient Voltage Suppression) diode, or a Schottky diode, in antiparallel to each light source LED₁, LED₂, ..., LEDₙ in the lighting module 30. The inventors have noted that in this first solution the reverse biasing voltage on each light source LED₁, LED₂, ..., LEDₙ can be limited to a value of approximately -0.6 V. This results in a mitigation of the problem, but does not make it possible to provide complete protection against the reverse biasing voltages. In addition, this is a costly solution since the cost of each antiparallel diode (Zener, TVS, or Schottky diode) is comparable to the cost of the LED chip itself, and the total cost of assembly of the SMD components may increase considerably in so far as the total number of SMD components is practically doubled.

A second solution to the problem of the reverse biasing transient voltages consists in using, for implementation of the light sources LED₁, LED₂, ..., LEDₙ, LEDs comprising an integrated ESD (ElectroStatic Discharge) diode. This second solution results in a mitigation of the problem similar to what can be obtained by adopting the first solution (which envisages connection of antiparallel diodes externally to the light sources LED₁, LED₂, ..., LEDₙ). In any case, integration of an ESD diode in the package of a LED chip is not widespread or feasible in small packages of an SMD type (for example, the packages 3014 and 2016) and causes a marked increase in the cost of the individual LED chip, even though it does not cause an increase in the cost of assembly of the SMD components.

A third solution to the problem of the reverse biasing transient voltages consists in connecting a resistor having a relatively high resistance (for example, in the range between 10 kQ and 300 kΩ) in parallel to each light source LED₁, LED₂, ..., LEDₙ in the lighting module 30. This third solution causes an effective reduction of the impedance between the terminals of the light sources LED₁, LED₂, ..., LEDₙ that counters the capacitive currents. Even though this third solution proves sufficiently effective in providing protection from the negative voltages on the light sources LED₁, LED₂, ..., LEDₙ, it leads to a considerable increase in the costs of assembly of the lighting module 30 for the same reason already illustrated with reference to the first known solution, i.e., doubling of the number of SMD components in the lighting module 30.

One or more embodiments of the present disclosure have the purpose of providing alternative solutions to the problem of the reverse biasing transient voltages.

For instance, Figure 4 shows an embodiment of a lighting module 30 substantially similar to the ones described with reference to Figures 1 to 3.

The lighting module 30 comprises two input terminals 30a, 30b for receiving a voltage *Vₒᵤₜ* (possibly pulse-width modulated) by connection to the output terminals 20a, 20b of a power-supply device 20. Connected in series between the terminals 30a and 30b are a plurality of n solid-state light sources LED₁, LED₂, ..., LEDᵢ, ..., LEDₙ that form a string or chain of light sources. The light sources may, for example, be LED sources or laser sources.

As already described previously, a constant-current regulator CCR having the purpose of regulating the level of current that flows in the chain of light sources may be connected in series to the light sources LED₁, LED₂, ..., LEDᵢ, ..., LEDₙ.

The constant-current regulator CCR can be connected in series to the light sources LED₁, LED₂, ..., LEDᵢ, ..., LEDₙ in any position of the string. For instance, the constant-current regulator CCR may be connected in series between two light sources that constitute the string (in the example considered here, the sources LEDᵢ and LEDₙ). In alternative embodiments, the constant-current regulator CCR may be connected in series at the beginning of the string (i.e., between the terminal 30a and the first light source LED₁) or at the end of the string (i.e., between the last light source LEDₙ and the terminal 30b).

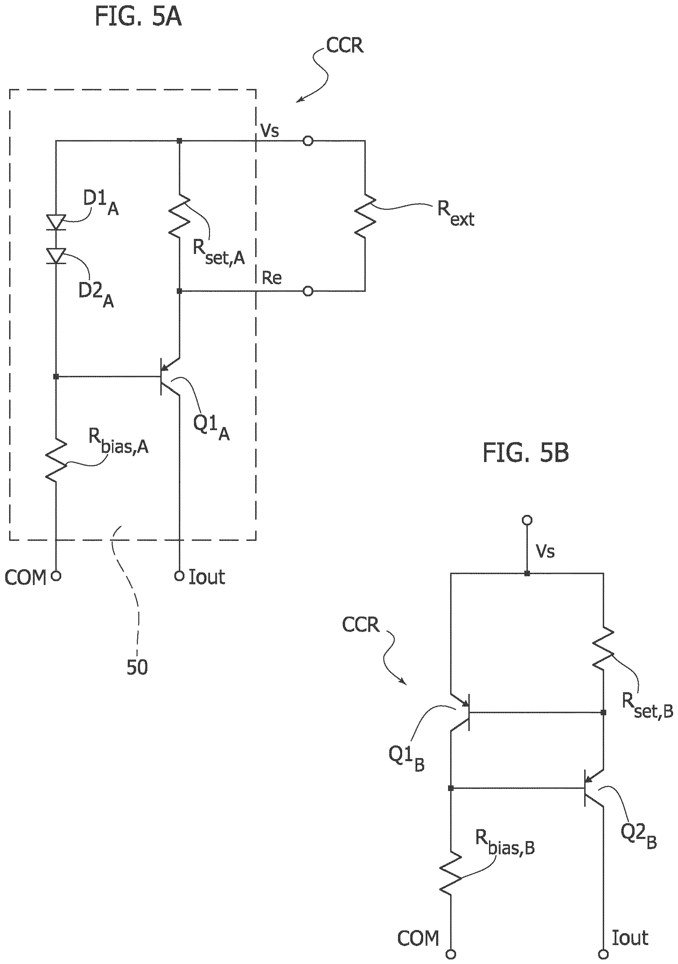

Figures 5A and 5B exemplify two possible preferred embodiments of the constant-current regulator CCR.

Figure 5A illustrates a constant-current regulator CCR in bipolar technology, implemented by means of an integrated circuit 50. The integrated circuit 50 comprises a first pin Vₛ and a second pin Iₒᵤₜ for connection in series to the light sources LED₁, LED₂, ..., LEDᵢ, ..., LEDₙ. The integrated circuit 50 further comprises a third pin Rₑ for connection to an external resistor Rₑₓₜ, with the external resistor Rₑₓₜ due to be connected between the pin Rₑ and the pin Vₛ. The integrated circuit 50 further comprises a fourth common pin COM. It will on the other hand be noted that the internal structure of the integrated circuit 50 for use as constant-current regulator is known in the art. Consequently, a detailed description of such a circuit (which comprises a pair of diodes D1_{A} and D2_{A}, a resistance R_{set,A}, a BJT Q1_{A} and a biasing resistance R_{bias,A} arranged substantially as illustrated in Figure 5A) will not be provided herein.

Figure 5B illustrates a constant-current regulator CCR implemented by means of discrete BJT components. In a way similar to the circuit illustrated in Figure 5A, the constant-current regulator CCR of Figure 5B comprises a first pin Vₛ and a second pin Iₒᵤₜ for connection in series to the light sources LED₁, LED₂, ..., LEDᵢ, ..., LEDₙ, and a common pin COM. Also in this case, the topology of the CCR (which comprises a first BJT Q1_{B}, a second BJT Q2_{B}, a resistance R_{set,B} and a biasing resistance R_{bias,B} arranged substantially as illustrated in Figure 5B) is known in the art, and a corresponding detailed description will not be provided herein.

As exemplified in Figure 4, also the electrical coupling of the constant-current regulator CCR with the power-supply bus and/or with the reference voltage terminal PE may entail the presence of parasitic capacitances, such as the capacitances C_{CCR+}, C_{CCR-} and C_{CCR,PE} .

Once again, it will be understood that the lighting module 30 illustrated in Figure 4 (and in the following figures) comprises just one chain of light sources (or smallest electrical units, SEUs) exclusively for greater simplicity of representation. In various embodiments, the lighting module 30 may comprise a number of strings of light sources connected in parallel. Preferably, each of these strings comprises a respective constant-current regulator CCR.

In various embodiments as exemplified in Figure 4, a lighting module 30 comprises a first transient voltage protection circuit 40a and a second transient voltage protection circuit 40b, which are connected in series to the string of light sources LED₁, LED₂, ..., LEDᵢ, ..., LEDₙ. The first protection circuit 40a is connected between the positive power-supply terminal 30a of the power-supply bus and the first light source LED₁ of the string of light sources. The second protection circuit 40b is connected between the last light source LEDₙ of the string of light sources and the negative power-supply terminal 30b of the power-supply bus.

In the case where the lighting module 30 comprises a number of strings of light sources connected in parallel (i.e., a plurality of SEUs connected in parallel), each of such strings may comprise respective protection circuits 40a and 40b.

Alternatively, the protection circuits 40a and 40b themselves may serve more than one string of light sources (i.e., the strings of light sources may be connected in parallel between the first protection circuit 40a and the second protection circuit 40b).

As exemplified in Figure 4, also electrical coupling of the protection circuits 40a and 40b with the power-supply bus and with the reference voltage terminal PE may determine the presence of parasitic capacitances, such as the capacitances C₄₀₊, C₄₀₋ and C_{40,PE}.

The protection circuits 40a, 40b are configured to assume different electrical states (for example, a conductive state and a non-conductive state - or, in other words, a low-impedance state and a high-impedance state) as a function of the value of the voltage *Vₒᵤₜ* received at the input terminals 30a, 30b. The voltage *Vₒᵤₜ* is modulated between a first value and a second value, with the first value higher than the second value. In particular, during the on-time of the modulated voltage *Vₒᵤₜ* (i.e., when the modulated voltage *Vₒᵤₜ* assumes the first value, for example a high value, such as 12 V, 24 V, 48 V) the protection circuits 40a and 40b exhibit a low-impedance current path, without having a significant impact on the electrical performance of the lighting module 30.

Instead, during the off-time of the modulated voltage *Vₒᵤₜ* (i.e., when the modulated voltage *Vₒᵤₜ* assumes the second value, for example a low value, such as 0 V) the protection circuits 40a and 40b exhibit a high-impedance current path that blocks the parasitic capacitive currents due to the supply voltage *V_{supply}* and/or to the modulated voltage *Vₒᵤₜ*.

In various embodiments, the low-impedance value of the first protection circuit and of the second protection circuit is preferably comprised between 0.1 Ω and 50 Ω, more preferably between 1 Ω and 25 Ω.

In various embodiments, the high impedance value of the first protection circuit and of the second protection circuit is preferably comprised between 100 kΩ and 100 MΩ, more preferably between 10 MΩ and 100 MΩ.

As illustrated in Figure 4, the protection circuits 40a, 40b may hence be configured to detect the voltage *Vₒᵤₜ* applied between the terminals 30a, 30b and switch as a function thereof. In particular, the protection circuits 40a, 40b can switch to a conductive state as a result of the fact that the voltage *Vₒᵤₜ* applied between the terminals 30a, 30b is higher than a certain first threshold, and to a non-conductive state as a result of the fact that the voltage *Vₒᵤₜ* applied between the terminals 30a, 30b is less than a certain second threshold, lower than or equal to the first threshold.

Alternatively, the value of impedance of the protection circuits 40a and 40b can vary continuously as a function of the value of the voltage *Vₒᵤₜ* applied between the terminals 30a, 30b.

Consequently, the protection circuits 40a, 40b facilitate elimination of the reverse biasing transient voltages on the light sources LED₁, LED₂, ..., LEDᵢ, ..., LEDₙ.

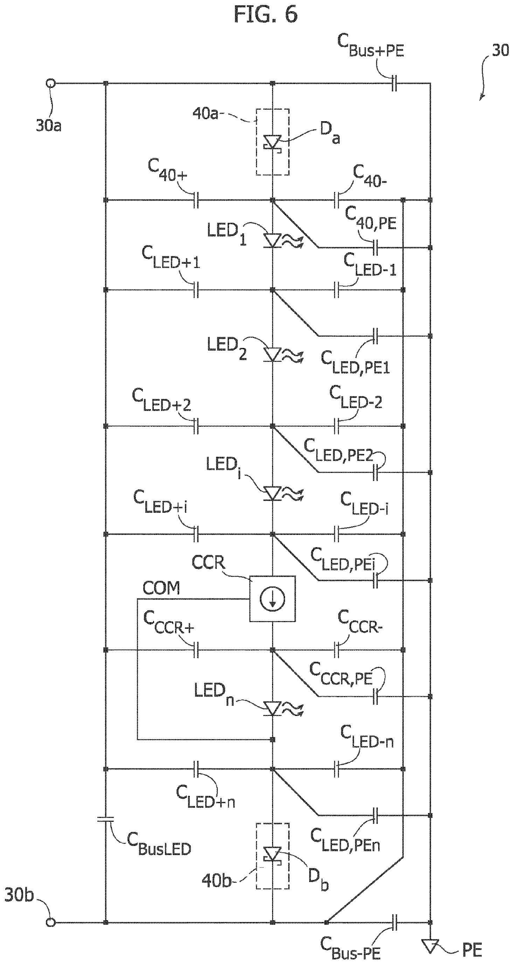

Figure 6 shows a preferred embodiment of a SEU implemented in a lighting module 30. In the example considered here, each protection circuit 40a, 40b comprises a respective low-capacitance blocking diode Dₐ, D_{b}. The blocking diodes Dₐ, D_{b} may be of a Schottky type, a Zener type, or a standard p-n junction type.

In the embodiment illustrated in Figure 6, the forward voltage drop on each blocking diode Dₐ, D_{b} is approximately in the range between 0.2 V and 0.5 V. It follows that there is an overall voltage drop, between the positive power-supply terminal 30a and the negative power-supply terminal 30b, comprised between approximately 0.4 V and 1.0 V (considering the presence of two blocking diodes Dₐ, D_{b} in each SEU). Consequently, considering the electrical resistance of the power-supply bus and the possible large number of light sources connected in series in each string, the margins of operating voltage of the constant-current regulator CCR may be reduced, with a consequent limitation of the overall length of the lighting module 30.

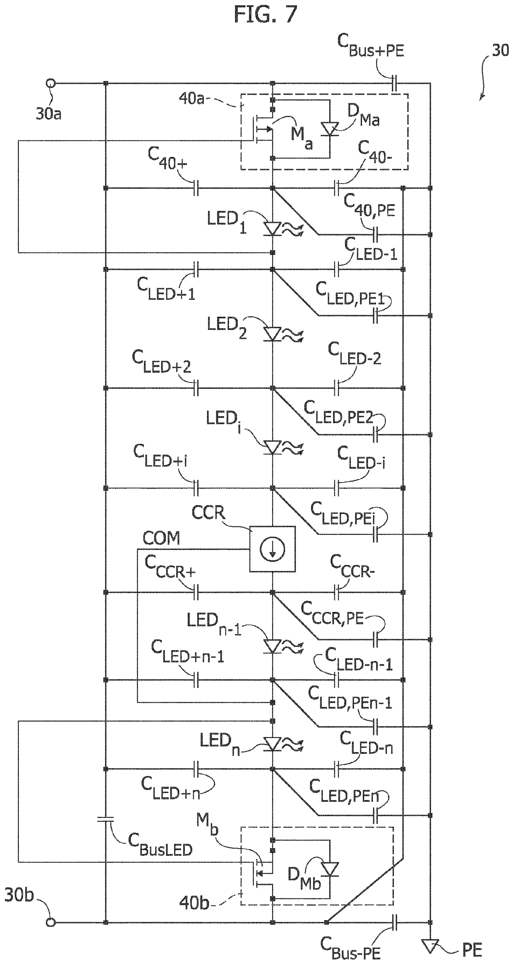

Figure 7 shows a further preferred embodiment of a SEU implemented in a lighting module 30. In the example considered here, each protection circuit 40a, 40b comprises a transistor of a MOSFET type Mₐ, M_{b} in a controlled-rectifier configuration, used for implementing a blocking device.

In particular, the protection circuit 40a comprises a p-MOSFET Mₐ having the drain terminal connected to the positive power-supply terminal 30a, the source terminal connected to the anode of the first light source LED₁ of the string, and the gate terminal connected to the cathode of the first light source LED₁ of the string.

Once again in the example illustrated in Figure 7, the protection circuit 40b comprises an n-MOSFET M_{b} having the drain terminal connected to the negative power-supply terminal 30b, the source terminal connected to the cathode of the last light source LEDₙ of the string, and the gate terminal connected to the anode of the last light source LEDₙ of the string.

The intrinsic body diodes D_{Ma}, D_{Mb} in the transistors Mₐ, M_{b} enable a first forward biasing of the light sources LED₁, LED₂, ..., LEDᵢ, ..., LEDₙ₋₁, LEDₙ during the on-time of the modulated voltage *Vₒᵤₜ*. The current due to the aforesaid forward biasing generates gate-to-source voltages that exceed the threshold voltages of the transistors Mₐ, M_{b}, thus determining switching-on of the transistors Mₐ, M_{b}.

Advantageously, as compared to the solution exemplified in Figure 6, the MOSFETs Mₐ, M_{b} have, in conditions of forward biasing, a drain-to-source voltage drop that is typically lower than the cathode-to-anode voltage drop that is present on the diodes Dₐ, D_{b}. For instance, in the case where the transistors Mₐ, M_{b} have a drain-to-source resistance R_{DS,ON} approximately equal to 2 Ω, the voltage drop on each of the transistors Mₐ, M_{b} in condition of forward biasing of the string of light sources may be approximately 40 mV, considering a typical value of power-supply current of approximately 20 mA. Consequently, the solution illustrated in Figure 7 has a lower impact on the reduction of the supply voltage that can be applied to the string of light sources LED₁, LED₂, ..., LEDᵢ, ..., LEDₙ₋ᵢ, LEDₙ, and hence on the overall length of the lighting module 30.

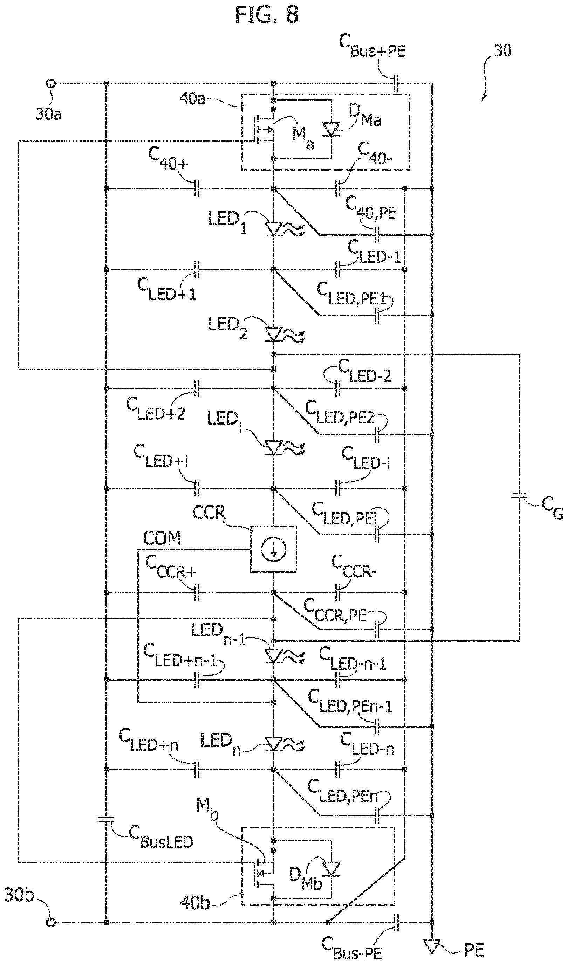

Figure 8 shows a further preferred embodiment of a SEU implemented in a lighting module 30. In a way similar to what is described with reference to Figure 7, also in this embodiment each protection circuit 40a, 40b comprises a transistor of a MOSFET type Mₐ, M_{b} used as controlled rectifier for implementing a blocking device.

In the example considered here, the protection circuit 40a comprises a p-MOSFET Mₐ having the drain terminal connected to the positive power-supply terminal 30a, the source terminal connected to the anode of the first light source LED₁ of the string, and the gate terminal connected to the cathode of a light source of the string that is subsequent to the first light source LED₁. For instance, the gate terminal of the transistor Ma is connected to the cathode of the second source LED₂, or of the third source, of the fourth source, or of a subsequent source (not visible in Figure 8).

Once again in the example illustrated in Figure 8, the protection circuit 40b comprises an n-MOSFET M_{b} having the drain terminal connected to the negative power-supply terminal 30b, the source terminal connected to the cathode of the last light source LEDₙ of the string, and the gate terminal connected to the anode of a light source of the string that precedes the last light source LEDₙ. For instance, the gate terminal of the transistor M_{b} is connected to the anode of the penultimate source LEDₙ₋₁, or of the third from last source, the fourth from last source, or even a preceding source (not visible in Figure 8).

The solution illustrated in Figure 8 exploits the same principle as the solution illustrated in Figure 7, but enables use of transistors Mₐ, M_{b} that have a higher threshold voltage. In fact, the gate terminals of the transistors Mₐ, M_{b} are biased by applying thereto a voltage that corresponds to the voltage drop on two or more LEDs connected in series. Thanks to this arrangement, it is possible to obtain low resistance values R_{DS,ON} of the transistors Mₐ, M_{b} even for transistors with higher threshold voltage.

On the other hand, the configuration of the transistors Mₐ, M_{b} illustrated in Figure 8 leads to an increase in the equivalent capacitance of the protection circuits 40a, 40b as compared to the solution of Figure 7. This can reduce the effectiveness of the protection circuits 40a, 40b in blocking the parasitic capacitive currents, with a consequent possibility that the light sources LED₁, LED₂, ..., LEDᵢ, ..., LEDₙ₋₁, LEDₙ will remain exposed to reverse biasing transient voltages. In order to solve this problem and improve protection against the reverse biasing transient voltages, one or more embodiments may comprise an additional capacitance C_{G} (for example, a capacitor) connected between the two gate terminals of the transistors Ma, M_{b}.

The capacitance C_{G} may be comprised between 10 pF and 50 nF and its value may be chosen as a function of the power absorbed by the lighting module 30. For instance, for low-power applications, the value of the capacitance C_{G} may be chosen of the order of 100 pF. For very-low-power applications, the value of the capacitance C_{G} may be equal to a few picofarads or a few tens of picofarads. For high-power applications (for example, for lighting modules that absorb a power of a few watts) the value of the capacitance C_{G} may be equal to a few nanofarads or a few tens of nanofarads.

It will be noted that a capacitance C_{G} between the two gate terminals of the transistors Mₐ, M_{b} may be used also in the embodiments as exemplified in Figure 7.

In various embodiments as exemplified here, if the constant-current regulator CCR is implemented with npn BJTs, the circuit CCR is connected in series to the string of light sources in such a way that there is at least one light source connected downstream of the circuit CCR itself (for example, the circuit CCR may be connected between the penultimate light source and the last light source of the string), and the common pin COM is connected downstream of the constant-current regulator itself.

In various embodiments as exemplified here, if the constant-current regulator CCR is implemented with npn BJTs, the circuit CCR is connected in series to the string of light sources in such a way that there is at least one light source connected upstream of the circuit CCR itself (for example, the circuit CCR may be connected between the first light source and the second light source of the string), and the common pin COM is connected upstream of the constant-current regulator itself.

Various embodiments of the present description hence provide a lighting module 30 in which two protection circuits 40a and 40b are arranged in series to at least one string of light sources LED₁, LED₂, ..., LEDᵢ, ..., LEDₙ₋ᵢ, LEDₙ between the power-supply terminals 30a and 30b in order to prevent onset of reverse biasing voltages on the light sources.

Advantageously, the embodiments described here require few additional electrical components, imply an almost negligible cost and do not have an appreciable effect on the overall performance of the lighting module 30.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

### LIST OF REFERENCE SIGNS

| | |
|---|---|
| Electrical power-supply source | 10 |
| Output terminals | 10a, 10b |
| Supply voltage | *V_{supply}* |
| Reference node | PE |
| Power-supply device | 20 |
| Output terminals | 20a, 20b |
| Output voltage of the power-supply | device *Vₒᵤₜ* |
| Diode bridge | DB |
| Resistance (electrical load) | R |
| Capacitance between primary and secondary | CY |
| Modulator circuit | 200 |
| Equivalent series inductance | ESL |
| Lighting module | 30 |
| Input terminals | 30a, 30b |
| Light source | LED₁, LED₂, LEDᵢ, LEDₙ₋₁, LEDₙ |
| Constant-current regulator | CCR |
| Capacitance | C_{LED+1}, C_{LED+2}, C_{LED+i}, C_{LED+n-1}, C_{LED+n} |
| Capacitance | C_{LED-1}, C_{LED-2}, C_{LED-i}, C_{LED-n-1}, C_{LED-n} |
| Capacitance | C_{LED,PE1}, C_{LED,PE2}, C_{LED,PEi}, C_{LED,PEn-1}, C_{LED,PEn} |
| Capacitance | C_{BusLED}, C_{Bus+PE}, C_{Bus-PE} |
| Capacitance | C₄₀₊, C₄₀₋ |
| Capacitance | C_{CCR+}, C_{CCR-}, C_{CCR,PE} |
| Equivalent resistance | Rt₂₀₀, Rt₁₀ |
| Current propagation path | CM, GRP |
| Differential mode voltage | DM |
| Linear driver circuit | 50 |
| Pin of the constant-current regulator | Vₛ, Iₒᵤₜ, Rₑ, COM |
| External resistor | Rₑₓₜ |
| Diode | D1_{A}, D2_{A} |
| Resistance | R_{set,A}, R_{set,B} |
| BJT | Q1_{A}, Q1_{B}, Q2_{B} |
| Biasing resistance | R_{bias,A}, R_{bias,B} |
| Protection circuit | 40a, 40b |
| Blocking diode | Da, D_{b} |
| MOSFET | Ma, M_{b} |
| Body diodes | D_{Ma}, D_{Mb} |
| Capacitance between the gates | C_{G} |

## Claims

1. A lighting module (30) comprising:
- a first input terminal (30a) and a second input terminal (30b) configured to receive therebetween a supply voltage (*Vₒᵤₜ*) that switches (200) between a first voltage value and a second voltage value, the first voltage value being higher than the second voltage value;
- a string of solid-state light sources (LED₁, LED₂, ..., LEDᵢ, ..., LEDₙ₋ᵢ, LEDₙ)connected in series between said first input terminal (30a) and said second input terminal (30b), wherein the string of light sources (LED₁, LED₂, ..., LEDᵢ, ..., LEDₙ₋ᵢ, LEDₙ)comprises a first light source (LED₁) having a respective positive terminal coupled to the first input terminal (30a) and a last light source (LEDₙ) having a respective negative terminal coupled to the second input terminal (30b); and
- a current regulating circuit (CCR) connected in series between said first input terminal (30a) and said second input terminal (30b), wherein said current regulating circuit (CCR) is configured to regulate a current that flows in said string of solid-state light sources (LED₁, LED₂, ..., LEDᵢ, ..., LEDₙ₋ᵢ, LEDₙ),
**characterized in that**:
- said lighting module (30) comprises a first negative voltage protection circuit (40a) and a second negative voltage protection circuit (40b) connected in series to said string of solid-state light sources (LED₁, LED₂, ..., LEDᵢ, ..., LEDₙ₋ᵢ, LEDₙ)between said first input terminal (30a) and said second input terminal (30b),
wherein said first protection circuit (40a) is connected between said first input terminal (30a) and said first light source (LED₁), and said second protection circuit (40b) is connected between said last light source (LEDₙ) and said second input terminal (30b),
wherein the first protection circuit (40a) comprises:
- a junction (Da) having the anode connected to the first input terminal (30a) and the cathode connected to said first light source (LED₁); or
- a p-MOS field effect transistor (Mₐ) having a drain terminal connected to the first input terminal (30a), a source terminal connected to said first light source (LED₁), and a gate terminal connected to a node intermediate two consecutive light sources (LED₁, LED₂) of said string of solid-state light sources (LED₁, LED₂, ..., LEDᵢ, ..., LEDₙ₋ᵢ, LEDₙ),
and wherein the second protection circuit (40b) comprises:
- a junction (D_{b}) having the anode connected to said last light source (LEDₙ) and the cathode connected to the second input terminal (30b); or
- an n-MOS field effect transistor (M_{b}) having a source terminal connected to said last light source (LEDₙ), a drain terminal connected to the second input terminal (30b), and a gate terminal connected to a node intermediate two consecutive light sources (LEDₙ₋₁, LEDₙ) of said string of solid-state light sources (LED₁, LED₂, ..., LEDᵢ, ..., LEDₙ₋ᵢ, LEDₙ).

2. The lighting module (30) of claim 1, wherein:
- the gate terminal of said p-MOS field effect transistor (Ma) is connected to a node intermediate said first light source (LED₁) and a second light source (LED₂) of said string of solid-state light sources (LED₁, LED₂, ..., LEDᵢ, ..., LEDₙ₋₁, LEDₙ), and
- the gate terminal of said n-MOS field effect transistor (M_{b}) is connected to a node intermediate a penultimate light source (LEDₙ₋₁) and said last light source (LEDₙ) of said string of solid-state light sources (LED₁, LED₂, ..., LEDᵢ, ..., LEDₙ₋₁, LEDₙ).

3. The lighting module (30) of claim 1, wherein:
- the gate terminal of said p-MOS field effect transistor (Ma) is connected to a node intermediate two consecutive light sources (LED₂, LEDᵢ) of said string of solid-state light sources (LED₁, LED₂, ..., LEDᵢ, ..., LEDₙ₋₁, LEDₙ), wherein said two consecutive light sources (LED₂, LEDᵢ) do not comprise said first light source (LED₁); and
- the gate terminal of said n-MOS field effect transistor (M_{b}) is connected to a node intermediate two consecutive light sources (LEDᵢ, LEDₙ₋₁) of said string of solid-state light sources (LED₁, LED₂, ..., LEDᵢ, ..., LEDₙ₋₁, LEDₙ), wherein said two consecutive light sources (LEDᵢ, LEDₙ₋₁) do not comprise said last light source (LEDₙ) .

4. The lighting module (30) of any one of the previous claims, comprising a capacitance (C_{G}) connected between the gate terminal of said p-MOS field effect transistor (Ma) and the gate terminal of said n-MOS field effect transistor (M_{b}).

5. The lighting module (30) of any one of the previous claims, comprising a plurality of strings of solid-state light sources (LED₁, LED₂, ..., LEDᵢ, ..., LEDₙ₋₁, LEDₙ), the strings in the plurality of strings being connected in parallel between said first input terminal (30a) and said second input terminal (30b), wherein each string in the plurality of strings comprises a respective current regulating circuit (CCR), a respective first negative voltage protection circuit (40a), and a respective second negative voltage protection circuit (40b) .

6. The lighting module (30) of any one of claims 1 to 4, comprising a plurality of strings of solid-state light sources (LED₁, LED₂, ..., LEDᵢ, ..., LEDₙ₋₁, LEDₙ), wherein each string in the plurality of strings comprises a respective current regulating circuit (CCR), the strings in the plurality of strings being connected in parallel between said first negative voltage protection circuit (40a) and said second negative voltage protection circuit (40b).

7. A lighting system comprising:
- a power-supply device (20) configured to receive at input a voltage (*V_{supply}*) from a power-supply source (10) and supply at output a supply voltage (*Vₒᵤₜ*) that switches (200) between a first voltage value and a second voltage value, the first voltage value being higher than the second voltage value; and
- one or more lighting modules (30) according to any of the previous claims connected to the output of the power-supply device (20) to receive said supply voltage (*Vₒᵤₜ*).

## Patentansprüche

1. Beleuchtungsmodul (30), umfassend:
- einen ersten Eingangsanschluss (30a) und einen zweiten Eingangsanschluss (30b), die konfiguriert sind, um dazwischen eine Versorgungsspannung (Vₒᵤₜ) zu empfangen, die zwischen einem ersten Spannungswert und einem zweiten Spannungswert umschaltet (200), wobei der erste Spannungswert höher als der zweite Spannungswert ist;
- eine Kette von Festkörperlichtquellen (LED₁, LED₂, ..., LEDᵢ, ..., LEDₙ₋₁, LEDₙ), die zwischen dem ersten Eingangsanschluss (30a) und dem zweiten Eingangsanschluss (30b) in Reihe geschaltet sind, wobei die Kette von Lichtquellen (LED₁, LED₂, ..., LEDᵢ, ..., LEDₙ₋₁, LEDₙ)eine erste Lichtquelle (LED₁) mit einem jeweiligen positiven Anschluss, der mit dem ersten Eingangsanschluss (30a) gekoppelt ist, und eine letzte Lichtquelle (LEDₙ) mit einem jeweiligen negativen Anschluss, der mit dem zweiten Eingangsanschluss (30b) gekoppelt ist, umfasst; und
- eine Stromregelschaltung (CCR), die zwischen dem ersten Eingangsanschluss (30a) und dem zweiten Eingangsanschluss (30b) in Reihe geschaltet ist, wobei die Stromregelschaltung (CCR) konfiguriert ist, um einen Strom zu regeln, der in der Kette von Festkörperlichtquellen (LED₁, LED₂, ..., LEDᵢ, ..., LEDₙ₋₁, LEDₙ)fließt,
**dadurch gekennzeichnet, dass**:
- das Beleuchtungsmodul (30) eine erste negative Spannungsschutzschaltung (40a) und eine zweite negative Spannungsschutzschaltung (40b) umfasst, die zwischen dem ersten Eingangsanschluss (30a) und dem zweiten Eingangsanschluss (30b) mit der Kette von Festkörperlichtquellen (LED₁, LED₂, ..., LEDᵢ, ..., LEDₙ₋₁, LEDₙ)in Reihe geschaltet sind,
wobei die erste Schutzschaltung (40a) zwischen dem ersten Eingangsanschluss (30a) und der ersten Lichtquelle (LED₁) geschaltet ist und die zweite Schutzschaltung (40b) zwischen der letzten Lichtquelle (LEDₙ) und dem zweiten Eingangsanschluss (30b) geschaltet ist,
wobei die erste Schutzschaltung (40a) umfasst:
- einen Übergang (Dₐ), dessen Anode mit dem ersten Eingangsanschluss (30a) verbunden ist und dessen Kathode mit der ersten Lichtquelle (LED₁) verbunden ist; oder
- einen p-MOS-Feldeffekttransistor (Mₐ) mit einem Drain-Anschluss, der mit dem ersten Eingangsanschluss (30a) verbunden ist, einem Source-Anschluss, der mit der ersten Lichtquelle (LED₁) verbunden ist, und einem Gate-Anschluss, der mit einem Knoten zwischen zwei aufeinanderfolgenden Lichtquellen (LED₁, LED₂) der Kette von Festkörperlichtquellen (LED₁, LED₂, ..., LEDᵢ, ..., LEDₙ₋₁, LEDₙ)verbunden ist,
und wobei die zweite Schutzschaltung (40b) umfasst:
- einen Übergang (D_{b}), dessen Anode mit der letzten Lichtquelle (LEDₙ) verbunden ist und dessen Kathode mit dem zweiten Eingangsanschluss (30b) verbunden ist; oder
- einen n-MOS-Feldeffekttransistor (M_{b}) mit einem Source-Anschluss, der mit der letzten Lichtquelle (LEDₙ) verbunden ist, einem Drain-Anschluss, der mit dem zweiten Eingangsanschluss (30b) verbunden ist, und einem Gate-Anschluss, der mit einem Knoten zwischen zwei aufeinanderfolgenden Lichtquellen (LEDₙ₋₁, LEDₙ)der Kette von Festkörperlichtquellen (LED₁, LED₂, ..., LEDᵢ, ..., LEDₙ₋₁, LEDₙ)verbunden ist.

2. Beleuchtungsmodul (30) nach Anspruch 1, wobei:
- der Gate-Anschluss des p-MOS-Feldeffekttransistors (Mₐ) mit einem Knoten zwischen der ersten Lichtquelle (LED₁) und einer zweiten Lichtquelle (LED₂) der Kette von Festkörperlichtquellen (LED₁, LED₂, ..., LEDᵢ, ..., LEDₙ₋₁, LEDₙ)verbunden ist, und
- der Gate-Anschluss des n-MOS-Feldeffekttransistors (M_{b}) mit einem Knoten zwischen einer vorletzten Lichtquelle (LEDₙ₋₁ ) und der letzten Lichtquelle (LEDₙ) der Kette von Festkörperlichtquellen (LED₁, LED₂, ..., LEDᵢ, ..., LEDₙ₋₁, LEDₙ)verbunden ist.

3. Beleuchtungsmodul (30) nach Anspruch 1, wobei:
- der Gate-Anschluss des p-MOS-Feldeffekttransistors (Mₐ) mit einem Knoten zwischen zwei aufeinanderfolgenden Lichtquellen (LED₂, LEDᵢ) der Kette von Festkörperlichtquellen (LED₁, LED₂, ..., LEDᵢ, ..., LEDₙ₋₁, LEDₙ)verbunden ist, wobei die zwei aufeinanderfolgenden Lichtquellen (LED₂, LEDᵢ) die erste Lichtquelle (LED₁) nicht umfassen; und
- der Gate-Anschluss des n-MOS-Feldeffekttransistors (M_{b}) mit einem Knoten zwischen zwei aufeinanderfolgenden Lichtquellen (LEDᵢ, LEDₙ₋₁) der Kette von Festkörperlichtquellen (LED₁, LED₂, ..., LEDᵢ, ..., LEDₙ₋₁, LEDₙ)verbunden ist, wobei die zwei aufeinanderfolgenden Lichtquellen (LEDᵢ, LEDₙ₋₁) die letzte Lichtquelle (LEDₙ) nicht umfassen.

4. Beleuchtungsmodul (30) nach einem der vorhergehenden Ansprüche, umfassend eine Kapazität (C_{G}), die zwischen dem Gate-Anschluss des p-MOS-Feldeffekttransistors (Mₐ) und dem Gate-Anschluss des n-MOS-Feldeffekttransistors (M_{b}) verbunden ist.

5. Beleuchtungsmodul (30) nach einem der vorhergehenden Ansprüche, umfassend eine Mehrzahl von Ketten von Festkörperlichtquellen (LED₁, LED₂, ..., LEDᵢ, ..., LEDₙ₋₁, LEDₙ), wobei die Ketten in der Mehrzahl von Ketten zwischen dem ersten Eingangsanschluss (30a) und dem zweiten Eingangsanschluss (30b) parallel geschaltet sind, wobei jede Kette in der Mehrzahl von Ketten eine jeweilige Stromregelschaltung (CCR), eine jeweilige erste negative Spannungsschutzschaltung (40a) und eine jeweilige zweite negative Spannungsschutzschaltung (40b) umfasst.

6. Beleuchtungsmodul (30) nach einem der Ansprüche 1 bis 4, umfassend eine Mehrzahl von Ketten von Festkörperlichtquellen (LED₁, LED₂, ..., LEDᵢ, ..., LEDₙ₋₁, LEDₙ), wobei jede Kette in der Mehrzahl von Ketten eine jeweilige Stromregelschaltung (CCR) umfasst, wobei die Ketten in der Mehrzahl von Ketten zwischen der ersten negativen Spannungsschutzschaltung (40a) und der zweiten negativen Spannungsschutzschaltung (40b) parallel geschaltet sind.

7. Beleuchtungssystem, umfassend:
- eine Stromversorgungsvorrichtung (20), die konfiguriert ist, um am Eingang eine Spannung (V_{supply}) von einer Stromversorgungsquelle (10) zu empfangen und am Ausgang eine Versorgungsspannung (Vₒᵤₜ) zu liefern, die zwischen einem ersten Spannungswert und einem zweiten Spannungswert (10) umschaltet (200), wobei der erste Spannungswert höher als der zweite Spannungswert ist; und
- ein oder mehrere Beleuchtungsmodule (30) nach einem der vorhergehenden Ansprüche, die mit dem Ausgang der Stromversorgungsvorrichtung (20) verbunden sind, um die Versorgungsspannung (Vₒᵤₜ) 15 zu empfangen.

## Revendications

1. Un module d'éclairage (30) comprenant :
- une première borne d'entrée (30a) et une seconde borne d'entrée (30b) configurées pour recevoir entre elles une tension d'alimentation (*Vₒᵤₜ*) qui bascule (200) entre une première valeur de tension et une seconde valeur de tension, la première valeur de tension étant supérieure à la seconde valeur de tension ;
- une chaîne de sources lumineuses à semi-conducteurs (LED₁, LED₂, ... LEDᵢ, ... LEDₙ₋₁, LEDₙ)montées en série entre ladite première borne d'entrée (30a) et ladite seconde borne d'entrée (30b), la chaîne de sources lumineuse (LED₁, LED₂, ... LEDᵢ, ... LEDₙ₋₁, LEDₙ) comprenant une première source lumineuse (LED₁) avec une borne positive respective couplée à la première borne d'entrée (30a), et une dernière source lumineuse (LEDₙ) avec une borne négative respective couplée à la seconde borne d'entrée (30b) ; et
- un circuit régulateur de courant (CCR) monté en série entre ladite première borne d'entrée (30a) et ladite seconde borne d'entrée (30b), ledit circuit régulateur de courant (CCR) étant configuré pour réguler un courant qui traverse ladite chaîne de sources lumineuses à semi-conducteurs (LED₁, LED₂,... LEDᵢ,... LEDₙ₋₁, LEDₙ),
**caractérisé en ce que** :
- ledit module d'éclairage (30) comprend un premier circuit de protection de tension négative (40a) et un second circuit de protection de tension négative (40b) , montés en série avec ladite chaîne de sources lumineuses à semi-conducteurs (LED₁, LED₂,... LEDᵢ,... LEDₙ₋₁, LEDₙ)entre ladite première borne d'entrée (30a) et ladite seconde borne d'entrée (30b),
ledit premier circuit de protection (40a) étant monté entre ladite première borne d'entrée (30a) et ladite première source lumineuse (LED₁), et ledit second circuit de protection (40b) étant monté entre ladite dernière source lumineuse (LEDₙ) et ladite seconde borne d'entrée (30b),
dans lequel le premier circuit de protection (40a) comprend :
- une jonction (Dₐ) avec l'anode reliée à la première borne d'entrée (30a) et la cathode reliée à ladite première source lumineuse (LED₁) ; ou
- un transistor à effet de champ p-MOS (Mₐ) avec une borne de drain reliée à la première borne d'entrée (30a), une borne de source reliée à ladite première source lumineuse (LED₁), et une borne de grille reliée à un noeud médian entre deux sources lumineuses consécutives (LED₁, LED₂) de ladite chaîne de sources lumineuses à semi-conducteurs (LED₁, LED₂,... LEDᵢ,... LEDₙ₋₁, LEDₙ),
et dans lequel le second circuit de protection (40b) comprend :
- une jonction (D_{b}) avec l'anode reliée à ladite dernière source lumineuse (LEDₙ) et la cathode reliée à la seconde borne d'entrée (30b) ; ou
- un transistor à effet de champ n-MOS (M_{b}) avec une borne de source reliée à ladite dernière source lumineuse (LEDₙ), une borne de drain reliée à la seconde borne d'entrée (30b), et une borne de grille reliée à un noeud médian entre deux sources lumineuses consécutives (LEDₙ₋₁, LEDₙ)de ladite chaîne de sources lumineuses à semi-conducteurs (LED₁, LED₂,... LEDᵢ,... LEDₙ₋₁, LEDₙ).

2. Le module d'éclairage (30) de la revendication 1, dans lequel :
- la borne de grille dudit transistor à effet de champ p-MOS (Mₐ) est reliée à un noeud médian entre ladite première source lumineuse (LED₁) et une seconde source lumineuse (LED₂) de ladite chaîne de sources lumineuses à semi-conducteurs (LED₁, LED₂, ... LEDᵢ, ... LEDₙ₋₁, LEDₙ), et
- la borne de grille dudit transistor à effet de champ n-MOS (M_{b}) est reliée à un noeud médian entre une avant-dernière source lumineuse (LEDₙ₋₁) et ladite dernière source lumineuse (LEDₙ) de ladite chaîne de sources lumineuses à semi-conducteurs (LED₁, LED₂,... LEDᵢ,... LEDₙ₋₁, LEDₙ).

3. Le module d'éclairage (30) de la revendication 1, dans lequel :
- la borne de grille dudit transistor à effet de champ p-MOS (Mₐ) est reliée à un noeud médian entre deux sources lumineuses consécutives (LED₂, LEDᵢ) de ladite chaîne de sources lumineuses à semi-conducteurs (LED₁, LED₂, ... LEDᵢ, ... LEDₙ₋₁, LEDₙ), lesdites deux sources lumineuses consécutives (LED₂, LEDᵢ) ne comprenant pas ladite première source lumineuse (LED₁) ; et
- la borne de grille dudit transistor à effet de champ n-MOS (M_{b}) est reliée à un noeud médian entre deux sources lumineuses consécutives (LEDᵢ, LEDₙ₋₁) de ladite chaîne de sources lumineuses à semi-conducteurs (LED₁, LED₂, ... LEDᵢ, ... LEDₙ₋₁, LEDₙ), lesdites deux sources lumineuses consécutives (LEDᵢ, LEDₙ₋₁) ne comprenant pas ladite dernière source lumineuse (LEDₙ).

4. Le module d'éclairage (30) de l'une des revendications précédentes, comprenant un condensateur (C_{G}) monté entre la borne de grille dudit transistor à effet de champ p-MOS (Mₐ) et la borne de grille dudit transistor à effet de champ n-MOS (M_{b}).

5. Le module d'éclairage (30) de l'une des revendications précédentes, comprenant une pluralité de chaînes de sources lumineuses à semi-conducteurs (LED₁, LED₂,... LEDᵢ, ... LEDₙ₋₁, LEDₙ), les chaînes de la pluralité de chaînes étant montées en parallèle entre ladite première borne d'entrée (30a) et ladite seconde borne d'entrée (30b), chaque chaîne de la pluralité de chaînes comprenant un circuit régulateur de courant (CCR) respectif, un premier circuit de protection de tension négative (40a) respectif, et un second circuit de protection de tension négative (40b) respectif.

6. Le module d'éclairage (30) de l'une des revendications 1 à 4, comprenant une pluralité de chaînes de sources lumineuses à semi-conducteurs (LED₁, LED₂,... LEDᵢ,... LEDₙ₋₁, LEDₙ), chaque chaîne de la pluralité de chaînes comprenant un circuit régulateur de courant (CCR) respectif, les chaînes de la pluralité de chaînes étant montées en parallèle entre ledit premier circuit de protection de tension négative (40a) et ledit second circuit de protection de tension négative (40b).

7. Un système d'éclairage comprenant :
- un dispositif de délivrance d'alimentation (20) configuré pour recevoir en entrée une tension (*V_{supply}*) provenant d'une source de délivrance d'alimentation (10), et délivrer en sortie une tension d'alimentation (*Vₒᵤₜ*) qui bascule (200) entre une première valeur de tension et une seconde valeur de tension, la première valeur de tension étant supérieure à la seconde valeur de tension ; et
- un ou plusieurs modules d'éclairage (30) selon l'une des revendications précédentes, reliés à la sortie du dispositif de délivrance d'alimentation (20) pour recevoir ladite tension d'alimentation (*Vₒᵤₜ*).
